# EUROPÄISCHE PATENTSCHRIFT

(11) **EP 0 543 185 B1**
(45) Veröffentlichungstag und Bekanntmachung des Hinweises auf die Patenterteilung: **13.09.1995**
(21) Anmeldenummer: 92118326.5
(22) Anmeldetag: 27.10.1992
(51) Int. Cl.: A01J 25/12

(54) **Formmaschine**
Moulding machine
Machine à mouler

(30) Priorität: 20.11.1991 CH 3407/91
(43) Veröffentlichungstag der Anmeldung: 26.05.1993
(73) Patentinhaber: KALT SÖHNE AG, CH-9235 Lütisburg (CH)
(72) Erfinder: Kalt, Ruedi, CH-9602 Bazenheid (CH)
(74) Vertreter: Révy von Belvárd, Peter

(56) Entgegenhaltungen:
- EP-A- 0 064 314
- EP-A- 0 406 899
- WO-A-79/00837
- FR-A- 2 224 081
- FR-A- 2 470 534
- NL-A- 8 801 869

## Beschreibung

Die Erfindung bezieht sich auf eine Formmaschine nach dem Oberbegriff des Anspruches 1.

Um Käse in Formen zu pressen, wird er in gelochte Formen eingeschwemmt, worauf mit Hilfe von Formmaschinen, wie sie etwa aus der EP-A1-406 899 bekannt sind, der Pressvorgang über mindestens einen die Form an einem Ende abdeckenden Deckel beginnt. In diesem Formvorgang wird gleichzeitig Flüssigkeit aus dem Käse gepresst und läuft durch Sieblöcher der Form ab. Man sollte nun meinen, diese Sieblöcher gestatteten ein ungehindertes Einführen und Herausziehen des Formdeckels in die bzw. aus der Form. In der Praxis ist dies jedoch nicht der Fall, nicht zuletzt deswegen, weil die Sieblöcher teilweise mit Käsemasse verklebt oder mit Flüssigkeit verlegt sind. Besonders das Herausziehen der Formendeckel gestaltet sich also relativ mühsam.

Dies ist aber nicht der einzige Nachteil bekannter Formmaschinen, vielmehr ergibt sich eine gewisse Sogwirkung beim Herausziehen der Formdeckel, die sogar zu einer Beschädigung der Oberfläche des an sich geformten Käses führen kann. Unansehnliche Käselaibe bzw. -formen sind die Folge, d.h. der so zur Ausschussware gewordene Käse muss entweder einem neuen Formvorgang unterworfen werden oder lässt sich schlechter verkaufen. Preiseinbussen und Kostensteigerungen sind die Folge.

Aus der NL-A-8 801 869 ist eine zwangsbetätigte Kippbewegung des Pressenstempels bekannt. Dazu ist ein komplizierter Aufbau mit einem am Rande des Pressenstempels über ein Gelenk befestigten pneumatischen Kipporgan und einem Gelenk zwischen Stempel und Pressgestänge vorgesehen. Nebst dem grossen apparativen Aufwand hat diese Kippvorrichtung den Nachteil, dass sie bei unterschiedlich hohen Käsepressmassen, etwa aufgrund unterschiedlicher Elastizitäten und/oder unterschiedlicher Einfüllmengen der Käsemassen bei jeder Pressung die optimale Kippbewegung auf einer den aktuellen Parametern entsprechenden Lage ausführen sollte, ansonsten die Käseoberfläche Gefahr läuft, beschädigt zu werden.

Der Erfindung liegt die Aufgabe zugrunde, geformte Käse einwandfreier Qualität durch eine diesbezüglich verbesserte Formmaschine zu erzielen. Dies gelingt durch die kennzeichnenden Merkmale des Anspruches 1.

Die erfindungsgemässe Lösung ist demgemäss zweiteilig. Denn einerseits muss die Verbindung zwischen Pressstempel und Formdeckel eine bewegliche Verbindung sein, anderseits muss eine Kippeinrichtung vorgesehen sein, die ein freies Kippen des Deckels ermöglicht. Durch diese Kippbewegung wird aber der Saugeffekt vermieden, da so Luft unter den Formdeckel gelangen kann. Der Vorgang des Entnehmens des Formdeckels, der aus den oben genannten Gründen vielfach doch wieder manuell ausgeführt wurde, um die äussere Form des Käses nicht zu verletzen, kann so ungefährdet automatisiert werden, was zu höherer Produktion und verringerten Kosten führt. Ausserdem werden auch die Energiekosten für die Formmaschine beträchtlich reduziert, da nun nicht mehr der Saugdruck an den Formen überwunden werden muss.

Weitere Einzelheiten der Erfindung ergeben sich anhand der nachfolgenden Beschreibung von in der Zeichnung schematisch dargestellten Ausführungsbeispielen. Es zeigen:
- Fig. 1: eine Formmaschine, an der die Erfindung zur Anwendung gelangt, wogegen in den
- Fig. 1A bis 3: verschiedene bevorzugte Ausführungsformen der Erfindung veranschaulicht sind.

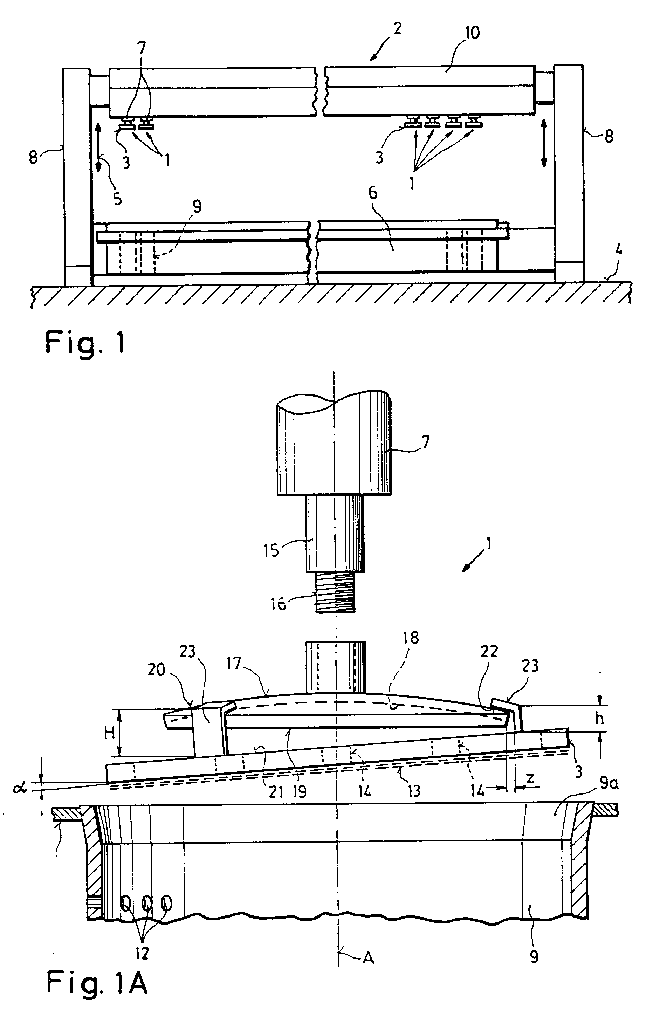

Eine Formmaschine für Käse 2 besteht gemäss Fig. 1 aus einer auf einem Aufstellboden 4 ruhenden, in Draufsicht im wesentlichen rechteckigen Wanne 6, in Abstand von den Querseiten der Wanne 6 stehenden Säulen 8, einem von den Säulen 8 vertikale verschiebbar getragenen Presskopf 10 und einer Reihe von vom Presskopf 10 getragenen Pressstempeln 1, die die ganze Unterfläche des Presskopfes 10 in Reihen bedecken, obwohl nur einige davon dargestellt sind. Diese Pressstempel 1 tragen die Formdeckel 3, die nach dem Absenken des Presskopfes 10 im Sinne des Pfeiles 5 mit Hilfe einer an sich bekannten Antriebsordnung durch Ausfahren des Pressstempels unter Fluiddruck innerhalb ihrer Zylinder 7 in in der Wanne stehende, vorzugsweise in steif mit ihnen verbundenen Kassetten, Formen 9 eingebracht werden können, um den in den Formen 9 befindlichen Käse zusammenzupressen und die Flüssigkeit desselben über Sieblöcher der Form auszutreiben. Dabei sind die die Formen aufnehmenden Kassetten zweckmässig von einem gemeinsamen, mit der Kassettenwandung starr verbundenen oberen Blech abgedeckt, das ein Einschwemmen des Käsemateriales in die Formen über entsprechende obere Öffnungen ermöglicht.

Diese Fig. 1A veranschaulicht diese Situation in vergrössertem Massstabe, wobei nur einige der Sieblöcher 12 der Form 9 gezeigt sind. Dementsprechend hat der Formdeckel 3 einen Durchmesser, der ein Einführen in die Form 9 gestattet. Der Formdeckel 3 ist mit einem Sieb 13 versehen und besitzt zweckmassig Öffnungen 14, die den ungehinderten Austritt von Flüssigkeit aus dem Käse der Form 9 nach oben gestatten.

Innerhalb des Zylinderaggregates 7 ist ein (nicht dargestellter) Kolben mit einer nach aussen ragenden Kolbenstange 15 verschiebbar geführt und kann unter den Druck eines Fluides gesetzt werden, um die in der Form 9 enthaltene Käsemasse zu pressen und in die entsprechende Form zu bringen. Am unteren Ende der Kolbenstange 15 ist eine Verbindungseinrichtung 16 an sich beliebiger Art (Streckverbindung, Bajonettverbindung od.dgl.) vorgesehen, vorzugsweise aber ein Schraubgewinde, das die zerstörungsfrei lösbare Verbindung mit einem verbreiterten Pressstempelende 17 zulässt.

Dieses Pressstempelende 17 ist gemäss Fig. 1A bevorzugt etwa tellerförmig bzw. kalottenförmig, so dass es in seinem Inneren einen Hohlraum 18 umschliesst, der das Abrinnen ausgepresster Flüssigkeit begünstigt. Durch Abschrauben des Pressstempels 17 von der Kolbenstange 15 ist es samt dem daran befestigten Formdeckel 3 auswechselbar, um die Form des Deckels an verschiedene Querschnitte der Form 9 anpassen zu können.

Die Verbindung zwischen dem Pressstempelende 17 und dem Formdeckel 3 ist nun erfindungsgemäss eine kippbewegliche Verbindung, da der Formendeckel 3 aus einer zur Achse A des Pressstempels 1 und der Form 9 senkrechten Lage in die aus Fig. 1A leicht gekippte Lage gelangen kann. So ergibt sich ein Kippwinkel alpha, der vorzugsweise 15° nicht übersteigen soll, zweckmässig sogar kleiner als 10° ist.

Die Verbindung zwischen Pressstempelende 17 und Formendeckel 3 ist, wie ersichtlich als Mitnahmeverbindung mit unteren und oberen Anschlagflächen 19 bzw. 20 des Pressstempelendes 17 und unteren und oberen Anschlagflächen 21 bzw. 22 des Formdeckels 3 ausgebildet. Dabei sind die oberen Anschlagflächen 22 des Deckels 3 an Haltepratzen 23 ausgebildet, die vorzugsweise zu dritt, in gleichmässigen Winkelabständen rund um den Deckel 3 angeordnet sind. Die Anschlagflächen 20 und 22 begrenzen dabei die Grösse des möglichen Kippwinkels alpha auf das oben angegebene Mass.

Bei der Abwärtsbewegung der Kolbenstange 15 erreicht der Formendeckel 3 schliesslich die in der Form befindliche Käsemasse und legt sich mit seiner unteren Anschlagfläche 21 gegen die untere Anschlagfläche 19 des Pressstempelendes 17, so dass er im weiteren Verlaufe seines Absenkens unter Druck senkrecht zur Achse A auf den Käse gepresst wird. Ist der Pressvorgang beendet, so kehrt der Pressstempel 1 wieder nach oben zurück. Dadurch, dass die Haltepratzen 23 unterschiedliche Höhen h bzw. H besitzen, schlägt die obere Anschlagfläche 20 des Pressstempelendes 17 zuerst an den oberen Anschlagflächen 23 der Haltepratzen der Höhe h an, so dass der Formendeckel 3 an dieser Seite etwas angewinkelt wird. Dies erlaubt den Eintritt von Luft unter den Formendeckel 3 und in die Form 9, so dass sich kein Sog entwickeln kann, der die Oberfläche des gebildeten Käselaibes (bei zylindrischer Form 9) oder Käsequaders verletzen könnte. Gleichzeitig wird auch die nötige Energie für das Anheben der Kolbenstange 15 beträchtlich reduziert, wenn man anhand der Fig. 1 die grosse Anzahl von Pressstempeln in Betracht zieht.

Wie weiter aus Fig. 1A ersichtlich ist, ist die Verbindung zwischen Pressstempelende 17 und Formdeckel 3 derart ausgebildet, dass sie eine Zentrierbewegung in einer horizontalen, quer zur Achse A gelegenen Ebene erlaubt. Hierzu können die Haltepratzen 23 gegebenenfalls als Federpratzen ausgebildet sein, doch ist dies für die Mitnahme über die Anschlagflächen 20, 22 nachteilig. Günstiger ist es, die Haltepratzen 23 an einem grösseren Umfange anzuordnen, als dem Umfange des Pressstempelendes 17 entspricht, so dass sich ein eine seitliche Bewegung ermöglichender Zwischenraum z ergibt.

Einer solchen, eine Bewegung in der Ebene des formdeckels 3 ermöglichenden Verbindung ist zweckmässig eine Zentrieranordnung zugeordnet, die sichert, dass der Formdeckel 3 zentrisch in die Form 9 eintaucht, wobei etwaige Toleranzen ausgeglichen werden. Vorzugsweise ist der obere Rand 9a der Form 9 sich trichterförmig nach aussen erweiternd ausgebildet, so dass sich eine Selbstzentrierung des Deckels 3 an der Form 9 ergibt.

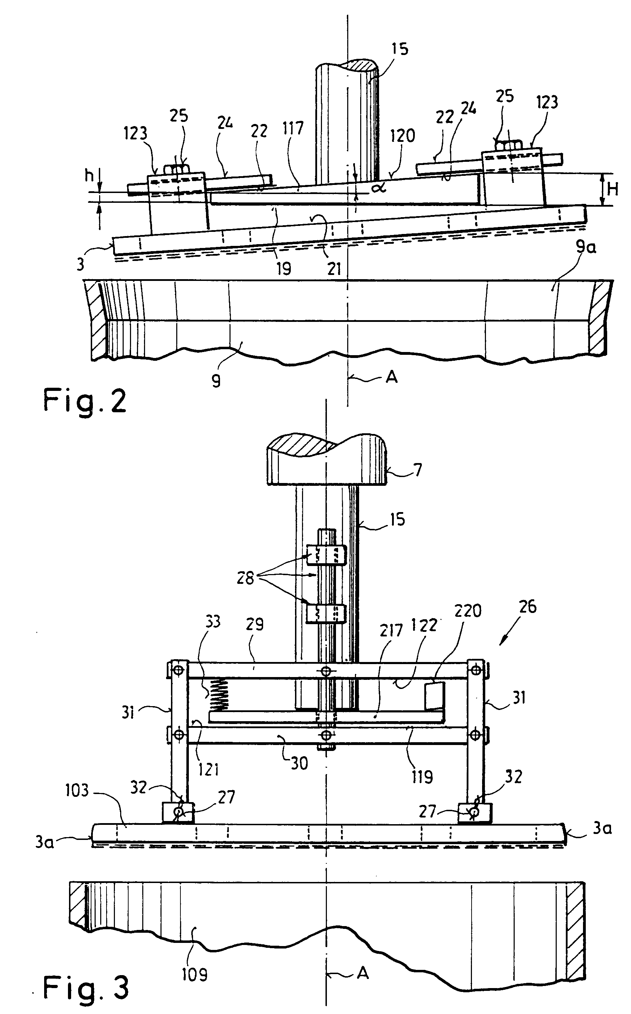

Wie Fig. 2 veranschaulicht, ist eine unterschiedliche Höhe h bzw. H der Haltepratzen nicht unbedingt erforderlich. Vielmehr sind dort Haltepratzen 123 gleicher Höhe vorgesehen, die zur Verbindung mit dem verbreiterten Pressstempelende 117 mit herausziehbaren Mitnehmerplatten 24 ausgestattet sind. Auf diese Weise ist das Ende 117 mit der Kolbenstange 15 gegebenenfalls fest verbunden, wogegen das Auswechseln des Deckels 3 durch Herausziehen der Platten 24, oder wenigstens eines Teiles von ihnen, nach Lösen von Klemm- oder Befestigungsschrauben 25 erfolgen kann.

Während nun im Falle der Fig. 1A der Abstand der unteren zur oberen Anschlagfläche 19 bzw. 20 des verbreiterten Pressstempelendes 17 über dessen Umfang jeweils gleich gross ist, ist dieser Abstand h bzw. H im Falle der Fig. 2 unterschiedlich, denn die obere Fläche 120 steht zur unteren Fläche 19 unter dem Winkel alpha.

Damit ergibt sich für diese Ausführungsform derselbe Effekt, wie oben anhand der Ausführung nach Fig. 1A beschrieben wurde, indem die Verbindung zwischen Pressstempelende 117 und Formdeckel 3 eine Kippbewegung zulässt. Es versteht sich, dass gewünschtenfalls auch Mischformen zwischen der Ausführung nach Fig. 1A und 2 möglich wären, indem sowohl das Pressstempelende 17 bzw. 117 eine schräge obere Anschlagfläche 120 aufweist, als auch die Haltepratzen 23 unterschiedliche Höhen besitzen. Ferner ist auch aus Fig. 2 ersichtlich, dass die Haltepratzen 123 zweckmässig an einem grösseren Umfange angeordnet sind, als dem Umfang des Pressstempelendes 117 entspricht.

Die Erfindung ist aber keineswegs auf die gezeigte Mitnahme über Haltepratzen 23 bzw. 123 beschränkt. Eine weitere Verwirklichung des erfindungsgemässen Konzeptes ist in Fig. 3 dargestellt. Dabei ist ein Lenkersystem 26 einerseits mit dem Formdeckel 103 über Gelenkachsen 27 schwenkbar verbunden, anderseits an der Kolbenstange 15 verschiebbar innerhalb von Gleitführungen 28 geführt. Die Grösse des Verschiebeweges wird durch ein verbreitertes, beispielsweise hebelartig ausgebildetes, Pressstempelende 217 bestimmt, das mit der Kolbenstange 15 fest verbunden ist. Dieses Pressstempelende 217 ist von einem oberen zweiarmigen Hebel 29 und einem unteren zweiarmigen Hebel 30 eingeschlossen, die je eine Anschlagfläche 121 bzw. 122 besitzen, die mit Gegenanschlagflächen 119 bzw. 220 des Pressstempelendes 217 zusammenwirken.

Der Formdeckel 103 ist vorzugsweise mit abgerundeten Seitenkanten 3a versehen, die das Schwenken um die Gelenkachsen 27 erleichtern. Ausserdem gestattet die gezeigte Lenkerverbindung, bei der die beiden zweiarmigen Hebel 29, 30 über Lenker 31 miteinander verbunden sind, welche Lenker 31 auch an den Achsen 27 angreifen, dass sich der Formdeckel 103 auch in seiner Ebene zur Zentrierung an der Achse A bewegen kann. Der Formdeckel 103 ist durch Abnehmen von der Achse 27 nach Lösen von Splinten 32 leicht austauschbar.

Beim Ausfahren der Kolbenstange 15 zur Ausübung eines Pressdruckes auf den zu formenden Käse innerhalb der Form 109 drückt die untere Anschlagfläche 119 des Pressstempelendes 217 auf die Anschlagfläche 121 des zweiarmigen Hebels 30 und hält diesen in genau senkrechter Lage zur Achse A, sobald sich der Deckel 103 gegen das in der Form 109 befindliche Käsematerial gelegt hat. Wird aber die Bewegungsrichtung der Kolbenstange 15 umgekehrt, so dass sie sich aufwärts bewegt, stösst die Anschlagfläche 220 an einem Ende des zweiarmigen Hebels 29 gegen dessen Anschlagfläche 122 und drückt den Hebel entgegen der Kraft einer Rückstellfeder 33 im Uhrzeigersinne nach oben, so dass der Deckel 103 gekippt wird. Erst bei neuerlicher Abwärtsbewegung der Kolbenstange 15 wird die Feder 33 die beiden Waaghebel 30 und 29 wieder in ihre horizontale Lage bringen.

Aus der obigen Beschreibung ist ersichtlich, dass Ausführungen nach Fig. 2, besonders aber nach Fig. 1A besonders einfach und robust sind, weshalb derartige Ausführungsformen bevorzugt werden. Dennoch ist es klar, dass die Erfindung, die auf einer kippbaren Verbindung in Zusammenarbeit mit einer Kippvorrichtung beruht, auf die verschiedenste Weise ausgeführt werden kann. Dabei ist ersichtlich, dass die sich ergebende Kippachse in einer am unteren Deckelrand (links in Fig. 1A und 2) vorzustellenden Horizontalebene gelegen ist.

Im Rahmen der Erfindung sind daher zahlreiche Varianten denkbar; beispielsweise kann das verbreiterte Pressstempelende, das ja auch Anschlagfunktion besitzt, anstelle des Hohlraumes 18 (Fig. 1) auch mit Öffnungen ähnlich den Öffnungen 14 des Deckels 3, oder mit Umfangsausnehmungen versehen sein, doch versteht es sich, dass die kalottenförmige Ausbildung nach Fig. 1 eindeutig definierende Anschlagflächen, ohne Schwächung des Pressstempelendes durch Ausnehmungen oder Öffnungen ergibt.

## Patentansprüche

1. Formmaschine für Käse, mit einer Reihe von Pressstempeln (1) zum Pressen des in gelochte Formen (9; 109) gefüllten Käsemateriales, welche Pressstempel (1) jeweils an einen den Käse abdeckenden Formdeckel (3; 103) über eine um eine Kippachse kippbare Verbindung (17, 23; 117, 123; 27-30) angeschlossenen und mit einer Betätigungseinrichtung (7) versehen sind, durch die die Formdeckel (3; 103) in die Form (9; 109) in zu deren Achse (A) im wesentlichen senkrechter Lage pressbar und dann wieder herausziehbar und über eine Kippeinrichtung (19-23; 220, 122) in eine angewinkelte Lage bezüglich der Form (9; 109) beim Herausziehen aus derselben bringbar sind, dadurch gekennzeichnet, dass die Kippeinrichtung (19-23; 220, 122) Anschlagflächen (19-22) am Formendeckel (3; 103) bzw. am Pressstempelende (17; 117; 217) aufweist, über die die Pressstempelbewegung unter Kippung des Formendeckels (3; 103) übertragbar ist.

2. Maschine nach Anspruch 1, dadurch gekennzeichnet, dass eine Begrenzungseinrichtung (23; 24) zum Begrenzen des Kippwinkels (alpha) vorgesehen ist, wodurch der Kippwinkel (alpha) auf maximal 15°, insbesondere auf maximal 10° begrenzbar ist.

3. Maschine nach Anspruch 1 oder 2, dadurch gekennzeichnet, dass die Kippachse am Deckelrand in einer Horizontalebene angeordnet ist, und dass sie vorzugsweise durch mehrere an der Oberseite des Pressstempelendes (17; 117; 217) gelegene, als Mitnehmer dienende Anschlagflächen (20, 22) einen unterschiedlichen, dem Kippwinkel (alpha) entsprechenden Abstand von der Ebene des Formdeckels (3; 103) bestimmt ist..

4. Maschine nach den Ansprüchen 2 und 3, dadurch gekennzeichnet, dass die Oberseite des Formdeckels (3) mit ein verbreitertes Pressstempelende (17; 117) mit den Anschlagflächen (19, 20; 120) des Pressstempels (1) umgreifenden Haltepratzen (23; 123), insbesondere deren drei, versehen ist, die mit radial einwärts ragenden Anschlägen (23; 24) als Begrenzungseinrichtung das Pressstempelende (17; 117) umgreifen.

5. Maschine nach einem der vorhergehenden Ansprüche, dadurch gekennzeichnet, dass die Verbindung als in der Ebene des Formdeckels (3; 103) bewegliche Verbindung ausgebildet ist, und dass vorzugsweise eine Zentriereinrichtung (9a) für den Formdeckel (3) bezüglich der Form (9) vorgesehen, insbesondere die Form (9) mit einem sich trichterförmig erweiternden Rand (9a) ausgebildet ist.

6. Maschine nach den Ansprüchen 4 und 5, dadurch gekennzeichnet, dass die Haltepratzen (23; 123) an einem grösseren Umfange, bezüglich der durch Form (9) und Pressstempel (1) verlaufenden Achse (A) angeordnet sind, als dem Umfange des verbreiterten Pressstempelendes (17; 117) entspricht.

7. Maschine nach einem der vorhergehenden Ansprüche, dadurch gekennzeichnet, dass das tellerartig verbreiterte Pressstempelende (17) mit Durchlassräumen (18) für aus dem Käse ausgepresste Flüssigkeit versehen ist, insbesondere kalottenförmig einen Hohlraum (18) umgibt.

8. Maschine nach einem der vorhergehenden Ansprüche, dadurch gekennzeichnet, dass die kippbare Verbindung als zerstörungsfrei lösbare Verbindung (16; 24, 25; 27, 32) ausgebildet ist, vorzugsweise das mit Anschlagflächen (19, 20) für den kippbaren Formdeckel (3) versehene verbreiterte Pressstempelende (17) vom Pressstempel (1) abschraubbar ist.

## Claims

1. A moulding machine for cheese, having a row of pressing plungers (1) for pressing the cheese material introduced into perforated moulds (9; 109), which pressing plungers (1) are each connected to a mould cover (3; 103) covering the cheese by way of a connection (17, 23; 117, 123; 27-30) which can tilt about a tilting axis and are provided with an operating device (7) by means of which the mould covers (3; 103) can be pressed into the mould (9; 109) in a position substantially perpendicular to their axis (A) and can then be withdrawn again, and can be brought into an angled position in relation to the mould (9; 109) via a tilting device (19-23; 220, 122) when they are withdrawn from the same, characterised in that the tilting device (19-23; 220, 122) has stop faces (19-22) on the mould cover (3; 103) and on the end (17; 117; 217) of the pressing plunger, respectively, via which the movement of the pressing plunger can be transmitted with tilting of the mould cover (3; 103).

2. A machine according to claim 1, characterised in that a limiting device (23; 24) is provided for limiting the tilting angle (alpha), by means of which the tilting angle (alpha) can be limited to a maximum of 15°, particularly to a maximum of 10°.

3. A machine according to claim 1 or 2, characterised in that the tilting axis is disposed in a horizontal plane at the edge of the cover, and that it is preferably determined by a plurality of stop faces (20, 22) serving as carriers and located on the upper face of the end of the pressing plunger (17; 117; 217) at different distances from the plane of the mould cover (3; 103) corresponding to the tilting angle (alpha).

4. A machine according to claims 2 and 3, characterised in that the upper face of the mould cover (3) is provided with holding brackets (23; 123), preferably three of them, which fit round a widened end (17; 117) of the pressing plunger comprising the stop faces (19, 20; 120) of the pressing plunger (1), which holding brackets fit, by means of radially inwardly projecting stops (23; 24), as a limiting device round the end (17; 117) of the pressing plunger.

5. A machine according to any one of the preceding claims, characterised in that the connection is constructed as a connection which can move in the plane of the mould cover (3; 103), and that a centring device (9a) is preferably provided for the mould cover (3) in relation to the mould (9), and the mould (9) is constructed in particular with a rim (9a) which widens conically.

6. A machine according to claims 4 and 5, characterised in that the holding brackets (23; 123) are disposed in relation to the axis (A) passing through the mould (9) and the pressing plunger (1) on a circumference which is larger than the circumference of the widened end (17; 117) of the pressing plunger.

7. A machine according to any one of the preceding claims, characterised in that the plate-like, widened end (17) of the pressing plunger is provided with passageway spaces (18) for liquid pressed out of the cheese, and in particular encloses a cavity (18) in the shape of a dome.

8. A machine according to any one of the preceding claims, characterised in that the tiltable connection is constructed as a non-destructively detachable connection (16; 24, 25; 27, 32), and that the widened end (17) of the pressing plunger, which is provided with stop faces (19, 20) for the tiltable mould cover (3), can preferably be unscrewed from the pressing plunger (1).

## Revendications

1. Machine à mouler pour du fromage avec une rangée de poinçons de pressage (1) destinés à presser le matériau du fromage introduit dans des moules (9; 109) perforés, les poinçons de pressage étant raccordés chacun, par une liaison (17, 23; 117, 123; 27 à 30) susceptible de basculer autour d'un axe de basculement, à un couvercle de moules (3; 103) recouvrant le fromage et pourvu d'un dispositif d'actionnement (7) au moyen duquel les couvercles de moules (3; 103) sont susceptibles d'être pressés dans le moule (9; 109) en une position sensiblement perpendiculaire à leur axe (A), puis en être de nouveau extraits, et sont susceptibles d'être places par l'intermédiaire d'un dispositif de basculement (19 à 23; 220, 122) en une position rabattue d'un certain angle par rapport au moule (9; 109) lors de l'extraction hors des moules, caractérisée en ce que le dispositif de basculement (19 à 23; 220, 122) présente des surfaces de butée (19; 22) ménagées sur le couvercle de moules (3; 103) ou sur l'extrémité de poinçons de pressage (17; 117; 217), surfaces de butée par l'intermédiaire desquelles le mouvement de poinçons de pressage peut être transmis avec basculement du couvercle de moule (3; 103).

2. Machine à mouler selon la revendication 1, caractérisée en ce qu'est prévu un dispositif de limitation (23; 24) destiné à limiter l'angle de basculement (alpha), cet angle de basculement (alpha) peut être limité à une valeur maximale de 15° en particulier une valeur maximale de 10°.

3. Machine à mouler selon la revendication 1 ou 2, caractérisé en ce que l'axe de basculement est disposé sur le bord du couvercle dans un plan horizontal et en ce qu'il est déterminé de préférence par plusieurs surfaces de butée (20, 22) placées en face supérieure de l'extrémité de poinçons de pressage, servant d'organe d'entraînement, déterminant un espacement différent correspondant à l'angle de basculement (alpha) vis-à-vis du plan du couvercle de moule (3; 103).

4. Machine à mouler selon les revendications 2 et 3, caractérisée en ce que la face supérieure du couvercle de moule (3) est pourvu d'une extrémité de poinçons de pressage (17, 117) élargie avec des griffes de maintien (23; 123) en particulier au nombre de trois, entourant des surfaces entourant des surfaces de butée (19, 20; 120) du poinçon de pressage (1) et entourant l'extrémité de poinçon de pressage (17; 117) par des butées (23; 24) servant de dispositif de limitation et faisant saillie radialement vers l'intérieur.

5. Machine à mouler selon l'une des revendications précédentes, caractérisée en ce que la liaison est réalisée sous forme d'une liaison déplaçable dans le plan du couvercle de moule (3; 103) et en ce que de préférence est prévu un dispositif de centrage (9a) destiné au couvercle de moule (3) par rapport au moule (9), en particulier le moule (9) étant réalisé avec un bord (9a) allant en s'élargissant en entonnoir.

6. Machine à mouler selon les revendications 4 et 5, caractérisée en ce que les griffes de maintien (23; 123) sont disposées sur une plus grande périphérie par rapport à l'axe (A) passant par le moule (9) et le poinçon de pressage (1) que ce qui correspond à la périphérie de l'extrémité (17; 117) agrandie du poinçon de pressage.

7. Machine à mouler selon l'une des revendications précédentes, caractérisée en ce que l'extrémité de poinçon de pressage (17) agrandie en plateau est pourvue d'espaces de passage (18) destinés à du liquide exprimé hors du fromage, en particulier, entoure en calotte un espace creux (18).

8. Machine à mouler selon l'une des revendications précédentes, caractérisée en ce que la liaison susceptible de basculer est réalisée sous forme de liaison (16; 24, 25; 27, 32) susceptible d'être désolidarisée sans destruction de préférence, l'extrémité de poinçon de pressage (117) élargie pourvue de surfaces de butée (19, 20) destinées au couvercle de moule (3) basculant pouvant être démonté du poinçon de pressage (1) par dévissage.
